# EUROPÄISCHE PATENTSCHRIFT

(11) **EP 1 664 514 B1**
(45) Veröffentlichungstag und Bekanntmachung des Hinweises auf die Patenterteilung: **10.07.2013**
(21) Anmeldenummer: 04762733.6
(22) Anmeldetag: 01.09.2004
(51) Int. Cl.: F16J 1/09

(54) **KOLBEN FÜR EINEN VERBRENNUNGSMOTOR**
PISTON FOR A COMBUSTION ENGINE
PISTON POUR MOTEUR A COMBUSTION

(30) Priorität: 02.09.2003 DE 10340291
(43) Veröffentlichungstag der Anmeldung: 07.06.2006
(73) Patentinhaber: MAHLE GMBH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2004/001946
(87) Internationale Veröffentlichungsnummer: WO 2005/024217

(56) Entgegenhaltungen:
- GB-A- 1 214 852
- GB-A- 1 343 377
- US-A- 2 880 044
- US-A- 4 375 782
- US-A- 4 587 177
- US-A1- 2001 036 893

## Beschreibung

Die Erfindung betrifft einen Kolben für einen Verbrennungsmotor nach dem Oberbegriff des Anspruches 1.

Ein Aluminiumkolben für einen Verbrennungsmotor mit einem im äußeren Bereich des Kolbenbodens angeordneten Ringelement aus NiResist, das die Bewehrung für die Nut eines Verdichtungsringes bildet, ist aus der japanischen Auslegeschrift JP 06002613 bekannt. Um das Ringelement auf einen Aluminiumgrundkörper sicher zu fixieren, ist es erforderlich, dieses auf dem Grundkörper mittels des Reibschweißverfahrens zu befestigen. Nachteilig ist hierbei, dass dieses Befestigungsverfahren relativ aufwendig ist.

Aus der Britischen Patentschrift GB 1 343 377 ist ein Kolben aus Leichtmetall bekannt, auf dessen Oberteil eine Kappe aus einem Eisenmetall aufgeschraubt ist. Maßnahmen, um diese Schraubverbindung zu festigen, sind hierbei nicht vorgesehen.

Aus der US-Patentschrift US 4 375 782 ist ein gebauter Kolben bekannt, dessen radial äußerer Randbereich in Kolbenbodennähe von einem aufgeschraubten Ringelement gebildet wird. Maßnahmen, um diese Schraubverbindung zu festigen, sind nicht vorgesehen.

Aus der Britischen Patentschrift GB 1 214 852 ist ein Kolben mit einem Oberteil bekannt, das auf relativ aufwendige Weise durch das Verfahren der Wärmeschrumpfung auf dem Kolben befestigt ist.

Aus der US-Patentschrift US 2 880 044 ist ein Kolben mit einem im radial äußeren Randbereich des Kolbenbodens angeordneten Ringelement bekannt, das auf aufwendige Weise mit Hilfe von speichenförmigen Elementen auf dem Kolbengrundkörper befestigt ist.

Aus der US-Patentanmeldung US 2001/0036893 A1 ist es bekannt, Werkstücke aus NiResist-Gusseisen mit Hilfe von Schneid-Werkzeugen aus Bor-Nitrid-Sintermetall zu schneiden.

Aus der US-Patentschrift US 4 587 177 ist ein Kolben bekannt, dessen Oberteil aus einem keramischen Fasermaterial besteht. Das Keramikoberteil wird auf relativ aufwendige Weise beim Gießen des Kolbens mit dem Kolbengrundkörper verbunden.

Aufgabe der vorliegenden Erfindung ist es, die Nachteil des Standes der Technik zu vermeiden. Gelöst wird die Aufgabe mit den im Kennzeichen des Hauptanspruches stehenden Merkmalen. Zweckmäßige Ausgestaltungen der Erfindung sind Gegenstand des Unteranspruches.

Hierdurch ergibt sich der Vorteil, einen Aluminiumkolben auf eine schnelle, einfache und sichere Weise mit einer mechanisch belastbaren, aufschraubbaren Ringnutbewehrung versehen zu können, und dieser Schraubverbindung eine für den Motorbetrieb ausreichende Festigkeit zu geben.

Ein Ausführungsbeispiel der Erfindung wird im Folgenden anhand der Zeichnungen beschrieben. Es zeigen
- Fig. 1: einen Kolben für einen Verbrennungsmotor mit einem NiResist-Ringelement gemäß der Erfindung in einem aus zwei Hälften bestehenden Schnittbild, das zwei um 90° versetzte Längsschnitte des Kolbens zeigt, und
- Fig. 2: eine vergrößerte Darstellung des Schnittes durch den Randbereich des Kolbenbodens mit dem NiResist-Ringelement.

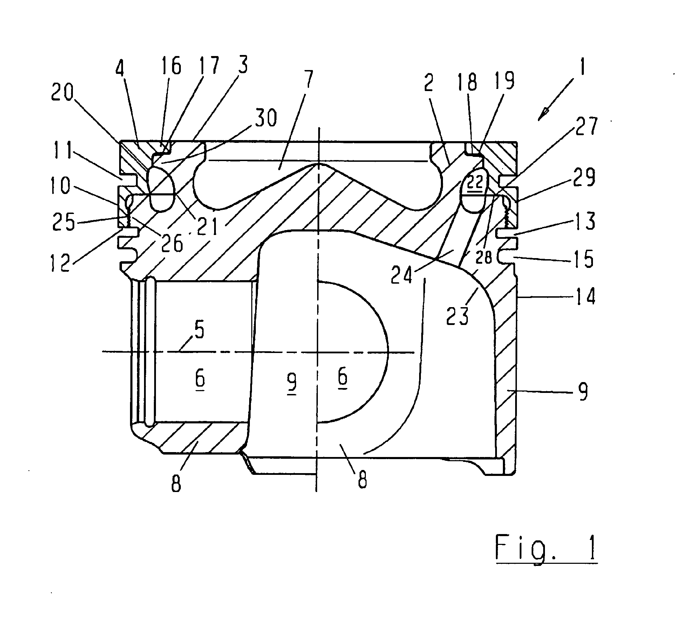

Fig. 1 stellt einen Kolben 1 für einen Verbrennungsmotor in einem aus zwei Hälften bestehenden Schnittbild dar, von dem die linke Hälfte einen Schnitt des Kolbens 1 entlang einer Längsachse 5 einer Nabenbohrung 6 und die rechte Hälfte einen um 90° dazu versetzten Schnitt durch den Kolben 1 zeigt.

Der Kolben 1 besteht aus einem im Wesentlichen zylinderförmigen Grundkörper 2, der einen Kolbenboden 3 aufweist, in dessem radial äußeren Randbereich ein Ringelement 4 angeordnet ist, von dem der radial äußere Teil des Kolbenbodens 3 gebildet wird. In den zentralen Bereich des Kolbenbodens 3 ist eine Brennkammer 7 eingeformt. Weiterhin weist der Grundkörper 2 auf seiner unteren, dem Kolbenboden 3 abgewandten Seite Bolzennaben 8 für die Nabenbohrungen 6 und die Bolzennaben 8 miteinander verbindende Schaftelemente 9 auf. Das Ringelement 4 weist auf seiner radial außen liegenden Mantelfläche 10 eine Nut 11 für einen in der Figur nicht dargestellten Verdichtungsring auf und bildet mit seiner unteren Stirnseite 12 den radial äußeren Teil der oberen Nutflanke einer 2. Ringnut 13. Unterhalb der 2. Ringnut 13 weist die radial äußere Mantelfläche 14 des Grundkörpers 2 eine Ölringnut 15 auf.

Radial innen ist an den kolbenbodenseitige Bereich des Ringelementes 4 ein Kragen 16 angeformt, der auf seiner dem Kolbenboden 3 abgewandten, unteren Seite eine Ringfläche 17 aufweist, die im vorliegenden Ausführungsbeispiel parallel zum Kolbenboden 3 liegt, die im Querschnitt aber auch schräg zum Kolbenboden 3 liegen kann, sodass die Ringfläche 17 eine konische Form aufweist. In den radial äußeren Bereich des Kolbenbodens 3 ist eine im Schnitt stufenförmige Ausnehmung 18 eingeformt, die eine zum Kragen 16 insoweit komplementäre Form aufweist, dass der Kragen 16 in die Ausnehmung 18 passt und zusätzlich zwischen die Ringfläche 17 und die Ausnehmung 18 ein tellerfederartig ausgebildetes, ringförmiges Dichtelement 19 eingebracht werden kann.

Unterhalb der Ringfläche 17 weist das Ringelement 4 auf seiner Innenseite eine Ausnehmung 20 auf, die mit einer nahe dem Kolbenboden 3 in die Außenseite des Grundkörpers 2 eingearbeiteten Ausnehmung 21 einen ringförmigen Kühlkanal 22 bildet. Über einen die Kolbeninnenseite 23 mit dem Kühlkanal 22 verbindenden Ölkanal 24 wird Kühlöl aus dem Kühlkanal 22 abgeleitet, das über einen weiteren in der Figur nicht dargestellten Ölkanal in den Kühlkanal 22 eingeleitet wird. Hierbei hat das Dichtelement 19 die Aufgabe, den Kolben 1 gegen Verbrennungsgase abzudichten.

Der Befestigung des Ringelementes 4 auf dem Grundkörper 2 dienen ein auf der Innenseite des Ringelememtes 4 nahe der unteren Stirnseite 12 angeordnetes Innengewinde 25, das auf ein auf der Mantelfläche 14 nahe der 2. Ringnut 13 angebrachtes Außengewinde 26 passt. Um der aus dem Innengewinde 25 und dem Außengewinde 26 bestehenden Schraubverbindung zwischen dem Grundkörper 2 und dem Ringelement 4 eine für den Motorbetrieb ausreichende Festigkeit zu geben, weist das Ringelement 4 eine zwischen dem Innengewinde 25 und der Ausnehmung 20 angeordnete und parallel zum Kolbenboden 3 liegende, ringförmige Auflagefläche 27 auf, die beim Aufschrauben des Ringelementes 4 auf den Grundkörper 2 auf einer ebenfalls parallel zum Kolbenboden 3 liegenden, ringförmigen und zwischen der Ausnehmung 21 und dem Außengewinde 26 des Grundkörpers 2 angeordneten Auflagefläche 28 zu liegen kommt.

Eine Verbesserung der Festigkeit der Schraubverbindung ergibt sich durch einen zwischen dem Innengewinde 25 und der Auflagefläche 27 des Ringelementes 4 in axialer Richtung angeordneten, verdünnten Wandbereich 29 des Ringelementes, der kein Innengewinde aufweist, und der beim Festschrauben des Ringelementes auf den Grundkörper 2 eine Dehnung erfährt. Hierdurch wird auf die Schraubverbindung eine mechanische Spannung ausgeübt, die deren Festigkeit erheblich verbessert.

Aufgrund seiner tellerfederartigen Ausbildung wird das Dichtelement 19 beim Aufschrauben des Ringelementes 4 auf den Grundkörper 2 verformt, wodurch es mechanisch vorgespannt wird und eine Kraft auf die beiden Kolbenteile 2, 4 ausübt. Dadurch ergibt sich eine weitere Verbesserung der Festigkeit der Schraubverbindung.

Zudem weist die Mantelfläche des Grundkörpers 2 zwischen dem Kragen 16 und dem Kühlkanal 22 einen radial nach außen gerichteten Vorsprung 30 auf, der kolbenbodenseitig die Ausnehmung 18 bildet, und der auf seiner dem Kolbenboden 3 abgewandten Seite den Kühlkanal 22 begrenzt. Der Vorsprung 30 weist eine so geringe Wandstärke auf, dass er beim Aufschrauben des Ringelementes 4 auf den Grundkörper 2 verformt wird und damit einen zusätzlichen Beitrag zur Sicherung gegen ein Lösen der Schraubverbindung leistet.

Hergestellt wird der Grundkörper 2 aus Aluminium, das durch Schmieden in die gewünschte Form gebracht wird. Das Ringelement 4 wird aus NiResist unter Anwendung eines Gießverfahrens hergestellt. NiResist ist ein austenitisches Gusseisen mit 12% bis 20% Nickel, das zudem die Legierungsbestandteile Mangan, Kupfer und Chrom enthält. NiResist eignet sich besonders gut zur Bewehrung von Kolbenringnuten.

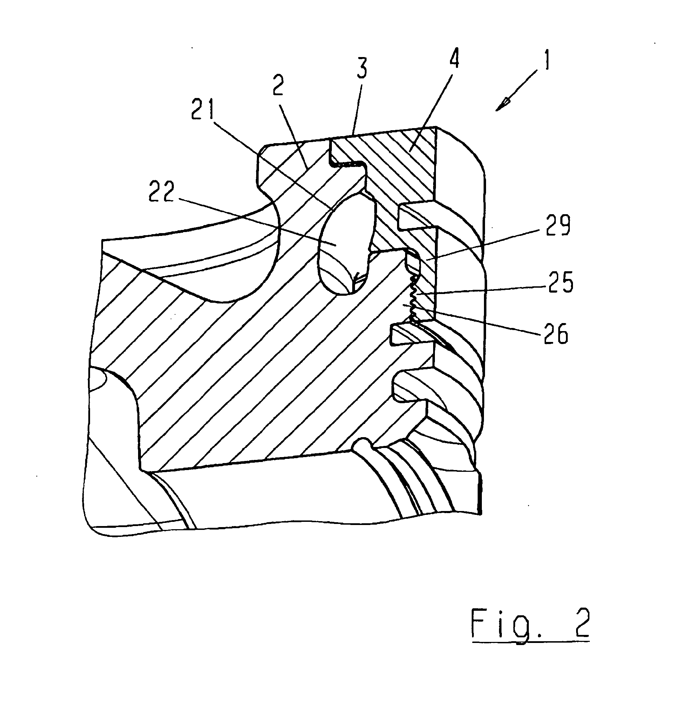

In Fig. 2 ist ein vergrößerter Schnitt durch den kolbenbodenseitigen Randbereich des Kolbens 1 dargestellt, der den Grundkörper 2 mit dem aufgeschraubten Ringelement 4 zeigt. Deutlich erkennbar ist die in den Randbereich des Kolbenbodens 3 eingeformte Ausnehmung 21, die zur Bildung des Kühlkanals 22 von dem aus NiResist bestehenden Ringelement 4 abgedeckt wird, wobei das Ringelement 4 über das Innengewinde 25 auf das Außengewinde 26 des Grundkörpers 2 geschraubt wird.

**Bezugszeichenliste**

| | |
|---|---|
| 1 | Kolben |
| 2 | Grundkörper |
| 3 | Kolbenboden |
| 4 | Ringelement |
| 5 | Längsachse |
| 6 | Nabenbohrung |
| 7 | Brennkammer |
| 8 | Bolzennaben |
| 9 | Schaftelement |
| 10 | Mantelfläche |
| 11 | Nut |
| 12 | untere Stirnseite des Ringelementes 4 |
| 13 | 2. Ringnut |
| 14 | Mantelfläche |
| 15 | Ölringnut |
| 16 | Kragen |
| 17 | Ringfläche |
| 18 | Ausnehmung |
| 19 | Dichtelement |
| 20 | Ausnehmung |
| 21 | Ausnehmung |
| 22 | Kühlkanal |
| 23 | Kolbeninnenseite |
| 24 | Ölkanal |
| 25 | Innengewinde |
| 26 | Außengewinde |
| 27 | Auflagefläche |
| 28 | Auflagefläche |
| 29 | verdünnter Wandbereich |
| 30 | Vorsprung |

## Patentansprüche

1. Kolben (1) für einen Verbrennungsmotor
- mit einem im Wesentlichen zyllnderförmigen Grundkörper (2) aus Aluminium, dessen eine Stirnfläche einen Kolbenboden (3) bildet,
- mit auf der dem Kolbenboden (3) abgewandten Unterseite des Grundkörpers (2) angeordneten Bolzennaben (8) mit Nabenbohrungen (6),
- mit die Bolzennaben (8) miteinander verbindenden Schaftelementen (9),
- mit einem im radial äußeren Randbereich des Kolbenbodens (3) angeordneten RIngelement (4) aus NiResist,
= das mit dem Grundkörper (2) einen ringförmigen Kühlkanal (22) bildet,
= das auf dem Grundkörper (2) über eine Schraubverbindung befestigt ist, die aus einem zwischen dem Kühlkanal (22) und der unteren Stimseite (12) des Ringelementes (4) liegenden, auf dessen radial innen liegenden Seite angeordneten Innengewinde (25) und aus einem dazu passenden, auf der Mantelfläche (14) des Grundkörpers (2) unterhalb des Kühlkanals (22) angeordneten Außengewinde (26) besteht,
= das im Schnitt zwelstufig ausgebildet Ist,
Ξ wobei die kolbenbodenseitig erste Stufe dadurch gebildet ist, dass an den kolbenbodenseitigen Bereich des Ringelementes (4) ein nach radial innen gerichteter, im Schnitt stufenförmiger Kragen (16) angeformt Ist, woran sich bolzennabenseitig der Kühlkanal (22) anschließt, und
Ξ wobei die zweite Stufe dadurch gebildet ist, dass das Ringelement (4) zwischen dem Kühlkanal (22) und dem Innengewinde (25) eine parallel zum Kolbenboden (3) liegende, ringförmige und vom Kühlkanal (22) ausgehend nach radial außen weisende Auflagefläche (27) aufweist, die beim Aufschrauben des Ringelementes (4) auf den Grundkörper (2) auf einer Auflagefläche (28) zu liegen kommt, die kolbenbodenseitig zwischen Kühlkanal (22) und Außengewinde (26) in den Grundkörper (2) eingeformt ist,
= und das zwischen der Auflagefläche (27) und dem Innengewinde (25) einen insoweit verdünnten, axial liegenden Wandbereich (29) aufweist, dass er beim Aufschrauben des Ringelementes (4) auf den Grundkörper (2) in axialer Richtung dehnbar ist,
**dadurch gekennzeichnet, dass** der Kragen (16) auf seiner dem Kolbenboden (3) abgewandten, unteren Seite eine im Wesentlichen parallel zum Kolbenboden (3) liegende Ringfläche (17) aufweist, dass in den radial äußeren Bereich des Kolbenbodens (3) eine im Schnitt stufenförmige Ausnehmung (18) eingeformt ist, die eine zum Kragen (16) im Wesentlichen komplementäre Form aufweist, und dass zwischen der Ringfläche (17) und der Ausnehmung (18) ein tellerfederartig ausgebildetes, ringförmiges Dichtelement (19) angeordnet ist, das beim Aufschrauben des Ringelementes (4) auf den Grundkörper (2) verformbar ist.

2. Kolben (1) für einen Verbrennungsmotor nach Anspruch 1, **dadurch gekennzeichnet, dass** der Grundkörper (2) einen radial nach außen gerichteten, ringförmigen und elastisch nachgiebigen Vorsprung (30) aufweist, der kolbenbodenseitig die Ausnehmung (18) bildet, der die kolbenbodenseitige Begrenzung des Kühlkanals (22) bildet, und der beim Aufschrauben des Ringelementes (4) auf den Grundkörper (2) verformbar ist.

## Claims

1. A piston (1) for an internal combustion engine, comprising:
- a substantially cylindrical main body (2), which is made of aluminum and the one end face of which forms a piston crown (3);
- pin bosses (8), which are arranged on the lower face of the main body (2) facing away from the piston crown (3) and which comprise pin bores (6);
- skirt elements (9) that connect the pin bosses (8) to each other;
- an annular element (4), which is arranged in a radially outer edge region of the piston crown (3) and made of NiResist;
= this annular element forming an annular cooling channel (22) together with the main body (2);
= this annular element being attached to the main body (2) by way of a screw connection, which is composed of an internal thread (25), which is located between the cooling channel (22) and the lower end face (12) of the annular element (4) and is arranged on the radially inner side of the annular element, and an external thread (26), which matches the internal thread and is arranged on the lateral face (14) of the main body (2) below the cooling channel (22);
= this annular element having a two-stage design in the cross-sectional view;
- wherein the first stage on the piston crown side is formed in that a radially inwardly directed collar (16), which has a stepped design in the cross-sectional view, is integrally molded with the region of the annular element (4) on the piston crown side, with the cooling channel (22) adjoining the collar on the pin boss side; and
- wherein the second stage is formed in that the annular element (4) between the cooling channel (22) and the internal thread (25) comprises an annular contact surface (27), which is located parallel to the piston crown (3) and, starting from the cooling channel (22), is directed radially outward and which, when the annular element (4) is screwed onto the main body (2), ends up seated on a contact surface (28) that is integrally molded into the main body (2) between the cooling channel (22) and the external thread (28) on the piston crown side;
= and this annular element, between the contact surface (27) and the internal thread (25), comprising an axially located wall region (29) that is thinned so that this region can be expanded in the axial direction when the annular element (4) is screwed onto the main body (2);
**characterized in that,** on the lower side facing away from the piston crown (3), the collar (16) comprises an annular surface (17) located substantially parallel to the piston crown (3); a recess (18), which has a stepped design in the cross-sectional view and a shape that is substantially complementary to the collar (16), is integrally molded in the radially outer region of the piston crown (3); and a disk spring-shaped, annular sealing element (19) is arranged between the annular surface (17) and the recess (18), this element being deformable when the annular element (4) is screwed onto the main body (2).

2. The piston (1) for an internal combustion engine according to claim 1, **characterized in that** the main body (2) comprises a radially outwardly directed, annular and elastically resilient projection (30), which forms the recess (18) on the piston crown side, the recess forming a delimitation of the cooling channel (22) on the piston crown side and being deformable when the annular element (4) is screwed onto the main body (2).

## Revendications

1. Piston (1) pour un moteur à combustion
- avec un corps de base (2) essentiellement cylindrique en aluminium, dont la surface frontale forme un fond de piston(3),
- avec des bossages d'axe (8) agencés du côté inférieur du corps de base (2) qui est détourné du fond de piston (3) et comportant des perçages de bossage (6),
- avec des éléments d'arbre (9) reliant entre eux les bossages d'axe (8),
- avec un élément annulaire (4) en NiResist, agencé dans une région de bord radialement extérieure du fond de piston (3),
= formant un canal de refroidissement annulaire (22) avec le corps de base (2),
= fixé au corps de base (2) par un assemblage par vissage, consistant en un filetage intérieur (25) disposé entre le canal de refroidissement (22) et le côté frontal (12) de l'élément annulaire (4) et agencé du côté radialement intérieur de celui-ci, et en un filetage extérieur (26) lui correspondant, prévu sur l'enveloppe (14) du corps de base (2), en-dessous du canal de refroidissement (22),
= présentant une section transversale à deux gradins,
Ξ dans lequel le premier niveau du côté du fond de piston est formé par un col (16) prévu dans la région de l'élément annulaire (4) du côté du fond de piston, lequel présente une section transversale en gradins et orienté radialement vers l'intérieur et sur lequel débouche le canal de refroidissement (22) du côté des bossages d'axe, et
Ξ dans lequel le deuxième niveau est formé par l'élément annulaire (4) comportant une surface d'appui (27) annulaire entre le canal de refroidissement (22) et le filetage intérieur (25), tournée radialement vers l'extérieur à partir du canal de refroidissement (22) et s'étendant parallèlement au fond de piston (3), laquelle s'applique, lors du vissage de l'élément annulaire (4) sur le corps de base (2), sur une surface d'appui (28) formée dans le corps de base (2), du côté du fond de piston, entre le canal de refroidissement (22) et le filetage extérieur (26),
= et comportant une région de paroi (29) s'étendant axialement et s'affinant entre la surface d'appui (27) et le filetage intérieur (25) en s'étirant dans la direction axiale lors du vissage de l'élément annulaire (4) sur le corps de base (2),
**caractérisé en ce que** le col (16) comporte une surface annulaire (17) s'étendant essentiellement parallèlement au fond de piston (3), du côté inférieur de celui-ci qui est détourné du fond de piston (3), **en ce qu'**une cavité (18) présentant une section transversale en gradins est formée dans la région radialement extérieure du fond de piston (3), et **en ce qu'**entre la surface annulaire (17) et la cavité (18) est agencé un élément d'étanchéité (19) annulaire du genre rondelle-ressort apte à se déformer lors du vissage de l'élément annulaire (4) sur le corps de base (2).

2. Piston (1) pour un moteur à combustion selon la revendication 1, **caractérisé en ce que** le corps de base (2) comporte une saillie élastique (30) annulaire orientée radialement vers l'extérieur et formant une cavité (18) du côté du fond de piston, laquelle forme une délimitation du canal de refroidissement (22) du côté du fond de piston et peut être déformée lors du vissage de l'élément annulaire (4) sur le corps de base (2).
